# EUROPÄISCHE PATENTSCHRIFT

(11) **EP 1 454 877 B1**
(45) Veröffentlichungstag und Bekanntmachung des Hinweises auf die Patenterteilung: **02.08.2006**
(21) Anmeldenummer: 04004620.3
(22) Anmeldetag: 01.03.2004
(51) Int. Cl.: C01B 7/01, B01J 4/00, B01J 8/04

(54) **Verfahren zur Herstellung von Chlorwasserstoff**
Process for manufacturing hydrogen chloride
Procédé de préparation de chlorure d'hydrogène

(30) Priorität: 05.03.2003 DE 10309799
(43) Veröffentlichungstag der Anmeldung: 08.09.2004
(73) Patentinhaber: SGL CARBON AG, 65203 Wiesbaden (DE)
(72) Erfinder: Franz, Marcus Dr., 86830 Schwabmünchen (DE); Künzel, Jürgen Dr., 86672 Thierhaupten (DE)

(56) Entgegenhaltungen:
- DE-A- 3 811 860
- DE-A- 19 939 951
- US-A- 1 921 388
- US-A- 4 468 376
- US-B1- 6 221 117

## Beschreibung

Die Erfindung betrifit ein Verfahren zur Herstellung von Chlorwasserstoff, das nicht an die Verfügbarkeit von Wasserstoff gebunden ist.

Hochreine Salzsäure wird nach dem Stand der Technik in Laminarbrennern durch Verbrennung der Elemente Chlor und Wasserstoff und anschließende Absorption des so erhaltenen Chlorwasserstoffs in Wasser erzeugt. Wasserstoff wird im Überschuss zugeführt, um den Anteil an freien Chlor im Produkt zu minimieren. Dadurch wird das Gleichgewicht in Gleichung (1) auf die Produktseite verschoben

Cl₂+(1+x)H₂→2 HCl+xH₂ (1)

Da Wasserstoff und Chlor aus Elektrolyseproussen (Chlor-Alkali-Elektrolyse) im günstigsten Fall stöchiometrisch erhalten werden, muss entweder überschüssiges Chlor anderweitig verbraucht oder der für den Prozess nach Gleichung (1) erforderliche Wasserstoff-Überschuss durch einen anderen Prozess bereitgestellt werden. Wird das Chlorgas zur Chlorwasserstoff-Synthese aus einer Schmelzflusselektrolyse gewonnen wie beispielsweise bei der Herstellung von Magnesium, dann muss der gesamte Wasserstoff von einer Wasserstofferzeugungsanlage, z.B. durch Reformierung von Erdgas, bereitgestellt werden.
Die Notwendigkeit zur zusätzlichen Erzeugung von Wasserstoff kann umgangen werden, wenn man Chlor direkt mit Erdgas und Luft zur Reaktion bringt:

xCl₂+yCH₄+zO₂+3,76zN₂→aHCl+bCO₂+cCO+dH₂O+eH₂+fNT+eCl₂ (2)

Im Prozess nach Gleichung (2) entstehen als Hauptprodukte Chlorwasserstoff (HCl, a ≤ 2 x), Kohlendioxid (CO₂) und Wasserdampf (H₂O). Als Nebenprodukte werden Kohlenmonoxid, Wasserstoff, Stickoxide (NOₓ) und chlorierte Kohlenwasserstoffe (CKW) erhalten sowie nicht umgesetztes freies Chlor. Der Stickstoff, der mit der Verbrennungsluft eingebracht wird, durchläuft bei diesem Prozess alle Anlagenteile, die deshalb entsprechend größer bemessen werden müssen. Weil die adiabatische Verbrennungstemperatur für den Prozess nach Gleichung (2) mit ca. 1950 °C für technische Anwendungen zu hoch ist, wird in die Brennkammer, in der die Reaktion abläuft, entweder zusätzlich Wasserdampf eingedüst oder gekühltes Produktgas zurückgeführt. Durch diese Maßnahmen kann, wie in der DE-A 199 39 951 beschrieben, z.B. in einem Porenbrenner ein von Chlor und CKW freies Produkt hergestellt werden. Durch die Dampfeindüsung wird Gleichung (2) auf der Eduktseite um Wasserdampf erweitert. Neben der Kühlung der Verbrennungsreaktion greift Wasserdampf durch die Reaktion mit freiem Chlor in den Verbrennungsprozess ein:

Cl₂ + H₂O → 2 HCl + 0,5 O₂ (3)

Dieser als Parallelreaktion zur Reduktion des Chlors nach Gleichung (2) ablaufende Prozess nach Gleichung (3) entspricht der Umkehrung des Deacon-Prozesses zur Herstellung von Chlor aus Chlorwasserstoff.
Bei dem Prozess nach Gleichung (2) entstandenes Kohlenmonoxid wird in Gegenwart von Wasserdampf durch die homogene Wassergasreaktion zu Kohlendioxid oxidiert, und dabei wird Wasserstoff freigesetzt:

CO + H₂O → H₂ + CO₂ (4)

Der im Prozess nach Gleichung (4) freigesetzte Wasserstoff kann parallel zu den Prozessen (2) und (3) dazu beitragen, freies Chlor zu binden.
In der deutschen Patentschrift DE 38 11 860 C2 wird ein Verfahren zur Herstellung von Chlorwasserstoff durch Verbrennung von chlorhaltigen organischen Verbindungen, beispielsweise Tetrachlormethan CCl₄, mit Erdgas und Luft beschrieben, welches in einer ersten Stufe unter Luftüberschuss ein noch chlorhaltiges Zwischenprodukt erzeugt. Für diesen Prozess wird in der DE 38 11 860 C2 folgende stöchiometrisch offensichtlich nicht korrekte Reaktionsgleichung angegeben:

CCl₄ + H₂O + O₂→ CO₂ + HCl + Cl₂ + O₂ (5)

Falls die chlorhaltige Verbindung nicht ausreichend brennbar ist, muss zusätzlich Brennstoff zugeführt werden.

Durch thermodynamische Berechnungen lässt sich jedoch zeigen, dass die Verbrennungstemperatur unter 900 °C fällt, wenn der für die Reaktion nach Gleichung (5) erforderliche Sauerstoff in Form von Luft zugeführt wird. Somit wird eine Stützfeuerung z.B. durch Erdgas unabdingbar, um eine Verbrennungsreaktion zu starten bzw. in Gang zu halten.
In der zweiten Stufe des Verfahrens aus der DE 38 11 860 C2 werden die Abgase des Prozesses (5) einem Überschuss an Reduktionsmittel (CO und/oder H₂, oder durch Verbrennung eines herkömmlichen Brennstoffs, z.B. Erdgas, unter reduzierenden Bedingungen erhaltenes Gas) ausgesetzt, so dass praktisch vollständige Entfernung des Sauerstoffs aus dem Abgas und Umsetzung des Chlors zu Chlorwasserstoff sichergestellt ist. Dieser Prozess wird in der DE 38 11 860 C2 folgende, stöchiometrisch offensichtlich nicht korrekte Reaktionsgleichung beschrieben:

Cl₂+O₂+CO+H₂ → CO₂ + HCl + H₂O (6)

Das in der DE 38 11 860 C2 beschriebene Verfahren ist aus wirtschaftlicher Sicht nachteilig wegen seines hohen Bedarfs an Brennstoff und Reduktionsmittel.
In Patentschrift DE 122 82 32 wird ein Verfahren für die Umsetzung von CKW-Abfällen zu Salzsäure und einem von Ruß und Chlor freiem Abgas beschrieben. Das Verfahren beruht auf der chlorreduzierenden Wirkung von Wasser bzw. Dampf. CKW mit einem Chlorgehalt von maximal 75 % werden zusammen mit Dampf, Wasser und Luft bei Temperaturen zwischen 950 und 1250 °C verbrannt. Es wurde festgestellt, dass ohne Dampf- und Wasserzufuhr der Chlorgehalt im Produktgas erheblich höher ist als mit Wasserzugabe. Bevorzugt wird eine im Verhältnis zum Chlorgehalt der zu verbrennenden Kohlenwasserstoffe doppelt so große Gewichtsmenge an Wasser oder/und Wasserdampf benutzt. Auch die Verbrennungsluft muss im Überschuss zugegeben werden, damit die Bildung von Ruß ausgeschlossen ist. Der Verbrennungsofen muss vorgeheizt werden, so dass auch für dieses Verfahren zusätzlicher Brennstoff, beispielsweise ein Brenngas, benötigt wird.
In der Europäischen Patentschrift EP 0 362 666 B1 wird ein Verfahren beschrieben, mit welchem aus Restgasen von Chlorierungsreaktionen in einer einstufigen Verbrennungsreaktion bei 800 bis 1600 °C mit Sauerstoff bzw Luft und einem Brenngas, beispielsweise Wasserstoff oder Methan, unter reduzierenden Bedingungen eine CKW- und chlorfreie Salzsäure herstellbar ist. Die Konzentration an Aktivkohle adsorbierbarer CKW in dieser Salzsäure ist kleiner als 1 g/l. Ein wesentliches Merkmal dieses Verfahrens besteht darin, dass im Abgas überschüssiger Wasserstoff in einem Volumenanteil von 2 bis 15 % vorhanden ist, um Chlordurchschläge zu vermeiden.

Kennzeichen der oben vorgestellten Verfahren ist die Verwendung von Sauerstoff als Oxidationsmittel, der aus ökonomischen Gründen nicht in reiner Form, sondern in Form von Luft zugeführt wird. Diese Verfahrensweise birgt jedoch Nachteile:
1. Der durch Luft eingetragene Stickstoffanteil erschwert die nachgeschaltete Absorption des Chlorwasserstoffs.
2. Bei der Prozessführung entsprechend Gleichung (2) ist aufgrund des CKW- und Kohlenmonoxid-Gehaltes eine Nachverbrennung des Restgases, das nach der Chlorwasserstoff-Absorption übrig bleibt, dringend erforderlich. Hierzu muss der gesamte abgekühlte Restgasstrom, der nur noch einen geringen Brennwert besitzt, wieder mit Erdgas oder sonstigen Kohlenwasserstoffen unter Luftüberschuss aufgeheizt werden.
3. Es besteht die Gefahr der unerwünschten Bildung von Stickoxiden (NOₓ).

Die Umkehrung der bekannten Deacon-Reaktion zur Gewinnung von Chlor aus Chlorwasserstoff mit Luft als Oxidationsmittel

2 HCl + 0,5 O₂ → Cl₂ + H₂O H_{R} = - 57,42 kJ (3*)

ermöglicht die Herstellung von Chlorwasserstoff nach Gleichung (3) unabhängig von der Verfügbarkeit von Wasserstoff. Die Kinetik dieses Prozesses wurde bereits untersucht (A.K. Nanda und D.L. Ulrichson The Kinetics of the Reverse Deacon Reaction, Int. J. Hydrogen Energy, Vol. 13, No. 2, pp. 67-76, 1988). Der Grad des Umsatzes von Chlor hängt wesentlich von den Parametern Temperatur und Wasserdampfgehalt ab. Bei Temperaturen von ca. 500 bis 700 °C und variierenden Anteilen von Wasserdampf und Chlor im Eduktgas wurde ein Chlorumsatz von maximal 45 % erreicht.
Die Aufgabe der vorliegenden Erfindung besteht darin, ein Verfahren anzugeben, das die nahezu vollständige Umsetzung von Chlor zu Chlorwasserstoff ermöglicht, ohne auf die Verfügbarkeit von Wasserstoff angewiesen zu sein. Diese Aufgabe wird gelöst durch das erfindungsgemäße zweistufige Verfahren zur Herstellung von Chlorwasserstoff aus Chlor und Dampf bzw. Wasser mit einem Reduktionsmittel, bevorzugt einem gasförmigen Kohlenwasserstoff. Die Aufgabe des erfindungsgemäßen Verfahrens besteht weiterhin darin, den Stickstoffanteil im Verbrennungssystem zu vermeiden, um die genannten Nachteile bei der Absorption des Chlorwasserstoffs und der Nachverbrennung des Restgases zu beseitigen. Zusätzlich soll durch das erfindungsgemäße Verfahren die Entstehung von chlorierten Kohlenwasserstoffen und Stickoxiden verhindert werden. Das erfindungsgemäße Verfahren soll außerdem eine geringere Menge an Erdgas oder anderen gas- oder dampfförmigen Kohlenwasserstoffen als das herkömmliche Verfahren nach Gleichung (2) benötigen.
Zur Lösung dieser Aufgabe wird erfindungsgemäß das zweistufige Verfahren nach dem Hauptanspruch angewendet Im ersten Verfahrensschritt des erfindungsgemäßen Verfahrens reagiert Chlor unter Wärmezufuhr mit Wasserdampf zu einem Gemisch aus Chlorwasserstoff und Sauerstoff, wobei Chlor jedoch nicht vollständig umgesetzt wird. Danach werden in einem zweiten Verfahrensschritt durch Zugabe eines Reduktionsmittels in einer exothermen Reaktion das im ersten Verfahrensschritt nicht umgesetzte Chlor zu Chlorwasserstoff reduziert und der im ersten Verfahrensschritt gebildete Sauerstoff durch das Reduktionsmittel gebunden. Aus dem nach dem erfindungsgemäßen Verfahren gewonnenen Chlorwasserstoff läßt sich in bekannter Weise durch Absorption eine von Chlor und CKW freie, hochreine Salzsäure herstellen. Die Erfindung ist jedoch nicht auf diese Verwendung des Chlorwasserstoffs beschränkt.
Die Unteransprüche geben vorteilhafte Ausgestaltungen des erfindungsgemäßen Verfahrens an.

Weitere Merkmale, Einzelheiten und Vorteile der Erfindung ergeben sich aus den Figuren und der nachfolgenden Beschreibung.

Die Figuren zeigen:
- Figur 1:: Grundsätzlicher Aufbau der Vorrichtung für die Herstellung von Chlorwasserstoff nach dem erfindungsgemäßen Verfahren
- Figuren 2 und 3: Vorteilhafte Ausführungsformen der Vorrichtung für die Herstellung von Chlorwasserstoff nach dem erfindungsgemäßen Verfahren

Der erste Schritt des erfindungsgemäßen Verfahrens entspricht der Umkehrung des Deacon-Prozesses zur Chlorgewinnung nach Gleichung (3*);

Cl₂+H₂O → 2 HCl+0.5 O₂ ΔH_{R}= + 57,42 kJ (3)

Die Reaktion nach Gleichung (3) ist in Richtung der Bildung von Chlorwasserstoff und Sauerstoff endotherm. Das bedeutet, dass diesem Reaktionssystem Wärme zugeführt werden muss, um Chlorwasserstoff zu erhalten. Andererseits wird mit steigender Temperatur die thermische Spaltung von Chlorwasserstoff in die Elemente begünstigt:

2 HCl → H₂ + Cl₂ (7)

Durch thermodynamische Berechnungen wurde ermittelt, dass die Ausbeute an Chlorwasserstoff in dem durch die Gleichungen (3) und (7) bestimmten System bei 1200 °C ein Maximum erreicht. Die theoretische Ausbeute an Chlorwasserstoff beträgt hier ca. 95 %. Bei 750 °C wird noch eine theoretische Ausbeute an Chlorwasserstoff von ca. 80 % erreicht.

Entsprechend dem erfindungsgemäßen Verfahren wird die Reaktion nach Gleichung (3) bei einer Temperatur im Bereich von 350 bis 1200 °C durchgeführt. Der Wasserdampf wird vorteilhaft in überhitztem Zustand, besonders vorteilhaft mit einer Temperatur zwischen 110-350 °C zugegeben, um eine Aufwärmung des Chlors zu erreichen und die Bildung von Kondensat zu verhindern. Vorteilhaft wird auch Chlor auf 100 bis 120 °C vorgewärmt. Bevorzugt wird Wasserdampf in einem 1,5- bis 2,5fachen Überschuss in das Reaktionssystem eingespeist, um den Reaktionsablauf in die gewünschte Richtung der Bildung von Chlorwasserstoff zu begünstigen. Eine besonders intensive Durchmischung der Edukte wird erreicht, wenn der Wasserdampf als Treibmittel für eine Strahlpumpe fungiert, welche die Eduktgase in den Reaktor fördert.
Ein nach Gleichung (3) produziertes Gasgemisch ist beispielsweise für die Gewinnung einer hochreinen Salzsäure wegen des vorhandenen Gehaltes an Restchlor noch ungeeignet, denn die Umsetzung des Chlors nach Gleichung (3) verläuft nicht vollständig. Zudem würde sich beim Abkühlen das Gleichgewicht wieder zugunsten der Chlorbildung verschieben.
Deshalb wird in dem erfindungsgemäßen Verfahren der endothermen ersten Stufe eine exotherme zweiten Prozessstufe nachgeschaltet. In dieser zweiten Stufe wird durch Zugabe eines gas- oder dampfförmigen Reduktionsmittels im ersten Verfahrensschritt noch nicht umgesetztes Chlor zu Chlorwasserstoff reduziert sowie der im ersten Verfahrensschritt gebildete Sauerstoff durch das Reduktionsmittel gebunden. Dieser Prozess ist stark exotherm. Als Reduktionsmittel eignen sich beispielsweise Methan, Erdgas, Kohlenmonoxid (CO), Wasserstoff, verdampfbare Kohlenwasserstoffe oder Gemische derselben. Geeignet sind auch reduzierende, wasserstoff- und kohlenmonoxid-reiche Verbrennungsgase aus reduzierend, d.h. mit Sauerstoffunterschuss betriebenen Brennern. Bei Verwendung von Methan als Reduktionsmittel, das nahezu vollständig zu Kohlendioxid oxidiert wird, läuft im zweiten Verfahrensschritt der folgende Prozess ab:

2 Cl₂ + CH₄ + O₂ → 4 HCl + CO₂ (8)

Dieser Prozess wird nach dem erfindungsgemäßen Verfahren bei Temperaturen im Bereich von 900 bis 1600 °C durchgeführt. Vorteilhaft wird das Reduktionsmittel für den zweiten Verfahrensschritt zusammen mit Wasserdampf eingespeist. Unter Berücksichtigung der im ersten Schritt zugegebenen Dampfmenge wird im zweiten Schritt gemeinsam mit dem Reduktionsmittel die nötige Menge Dampf zugesetzt, um das Temperaturniveau im vorteilhaften Bereich zwischen 900 und 1600 °C einzustellen. Durch die kühlende Wirkung des Wasserdampfes wird die Temperatur für die zweite Reaktionsstufe in der für die Bildung von Chlorwasserstoff günstigen Richtung beeinflusst. Die Wasserdampfeinspeisung muss jedoch so dosiert werden, dass die Temperatur des Reaktors nicht unter 900 °C sinkt. Bei tieferen Temperaturen besteht die Gefahr der Bildung von chlorierten Kohlenwasserstoffen.
Durch die Einspeisung des Reduktionsmittels mit Wasserdampf wird die Vermischung der Reaktionspartner verbessert, insbesondere wenn Reduktionsmittel und Wasserdampf mit einer dampfbetriebenen Strahlpumpe in den Reaktor gefördert werden.

Aus den Gleichungen (3) und (8) ergibt sich für den Gesamtprozess die folgende Bruttogleichung:

4 Cl₂ + CH₄ + 2H₂O → 8 HCl + CO₂ (9)

Durch einen Überschuss an Methan läßt sich das Gleichgewicht nach Gleichung (9) zugunsten der Bildung von Chlorwasserstoff verschieben.. Deshalb wird in einer vorteilhaften Variante des erfindungsgemäßen Verfahrens das Reduktionsmittel so zudosiert, dass das Verhältnis zwischen der Stoffmenge des zugeführten Reduktionsmittels und der Ausgangsstoffmenge des Chlors 1 : 4 bis 1,5 : 4 beträgt. Je höher der Überschuss an Reaktionsmittel, desto höher ist der Anteil an Kohlenmonoxid im Produktgas, da das überschüssige Reduktionsmittel nicht mehr vollständig zu Kohlendioxid oxidiert werden kann. Kohlenmonoxid ist nicht in Salzsäure löslich und wird nach der Adsorption des Chlorwasserstoffs durch thermische Nachverbrennung des Produktgases beseitigt.

In nachgeschalteten Dampferzeugern oder Gaskühlem und Absorbern wird das Produktgas, vorteilhaft unter Wärmerückgewinnung, zu Salzsäure weiter verarbeitet.

Die energetische Betrachtung der beiden Reaktionen ergibt, dass durch den exothermen zweiten Verfahrensschritt ausreichend Energie frei wird, so dass der endotherme erste Verfahrensschritt vorteilhaft durch Wärmeeinkopplung aus dem zweiten Verfahrensschritt in das Chlor-Dampf-Gemisch unterstützt wird Dies lässt sich besonders gut erreichen, wenn die Reaktanden des ersten Verfahrensschrittes im Gegenstrom zu denen des zweiten Verfahrensschrittes geführt werden.

Weiterhin ist es vorteilhaft, den Verlauf der ersten Reaktion des erfindungsgemäßen Verfahrens katalytisch zu beschleunigen. Hierfür bieten sich solche Katalysatoren an, die bei der Chlorbildung nach der Deacon-Reaktion entsprechend Gleichung (3*) wirksam sind.

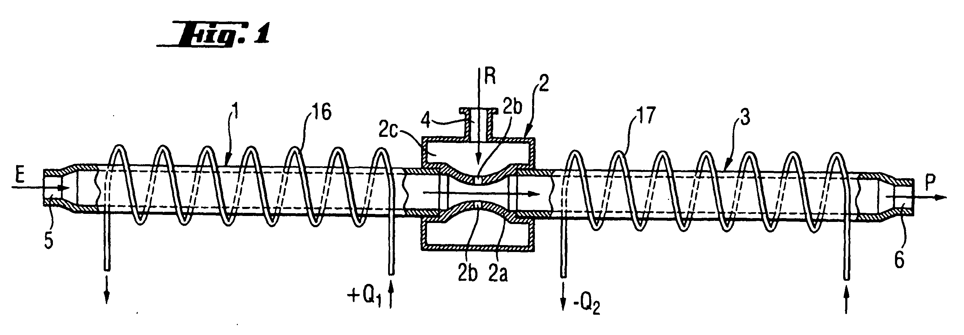

Weitere Einzelheiten und Ausgestaltungen der Vorrichtung für die Durchführung des erfindungsgemäßen Verfahrens werden im folgenden beschrieben. Der grundsätzliche Aufbau dieser Vorrichtung ist in Figur 1 schematisch dargestellt.
Die Vorrichtung besteht aus einem beispielsweise durch ein Rohr 1 gebildeten, eine Heizeinrichtung 16 aufweisenden ersten Reaktor, in welchem das über die Zutrittsöffnung 5 eingebrachte Eduktgemisch E aus Chlor und Wasserdampf im ersten Verfahrensschritt entsprechend Gleichung (3) in einer endothermen Reaktion umgesetzt wird, und aus einem nachgeschalteten, beispielsweise durch ein Rohr 3 gebildeten, eine Kühleinrichtung 17 aufweisenden zweiten Reaktor, in welchem die exotherme Reaktion des zweiten Verfahrensschrittes entsprechend Gleichung (8) abläuft und aus welchem das Produktgemisch P über die Austrittsöffnung 6 entnommen werden kann. Die Rohre 1 und 3 der Reaktoren sind über ein Verbindungsstück 2 verbunden, über welches das für den zweiten Verfahrensschritt benötigte Reduktionsmittel R, beispielsweise Methan, zugeführt werden kann. Das Verbindungsstück 2 ist vorteilhafterweise als Venturidüse 2a ausgebildet, an deren Engstelle das Reduktionsmittel R über eine oder mehrere Bohrungen 2b angesaugt wird. Die Venturidüse 2a ist von einer Verteilerkammer 2c umgeben, welche eine Zutrittsöffuung 4 für das Reduktionsmittel R aufweist.
Das Produktgasgemisch P tritt weitestgehend abgekühlt durch die Öffnung 6 aus dem Reaktor 3 aus und wird zur weiteren Verarbeitung einem Absorber zugeführt (in Figur 1 nicht dargestellt).
In einer vorteilhaften Weiterentwicklung des Verfahrens wird die im zweiten Verfahrensschritt entstehende Wärme zumindest teilweise zur Aufheizung der Edukte B genutzt, beispielsweise mittels eines Wärmetauschers oder durch Führung der Reaktionsgase des ersten Verfahrensschrittes im Gegenstrom zu denen des zweiten Verfahrensschrittes.

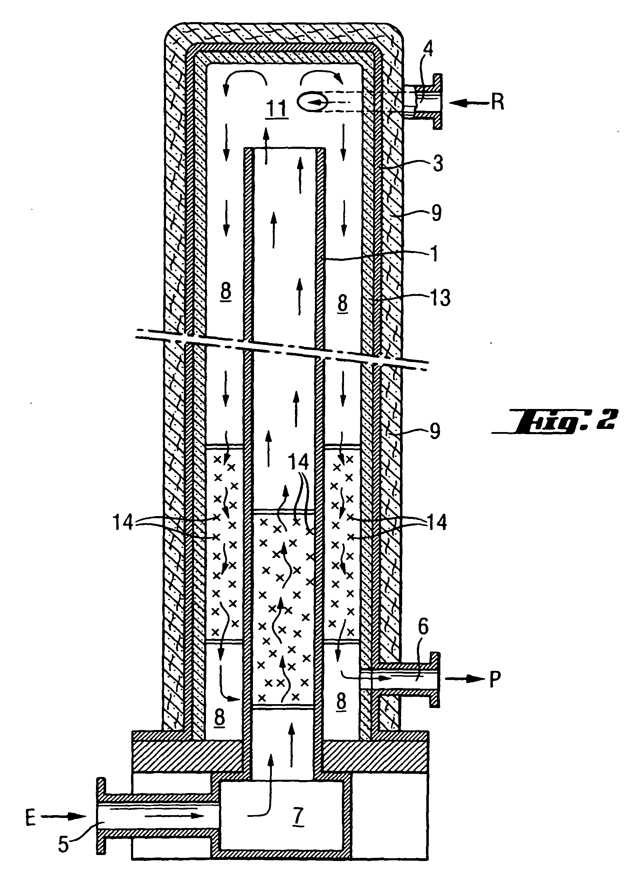

Figur 2 zeigt einen Vorrichtung, welche die Nutzung der im exothermen zweiten Verfahrensschritt freigesetzten Wärme zur Aufheizung der Edukte E des endothermen ersten Verfahrensschrittes ermöglicht. Der Reaktor besteht aus zwei konzentrisch ineinander gesteckten Rohren 1 und 3. An einem Ende des inneren Rohrs 1 befindet sich die Eduktkammer 7 mit der Zutrittsöffnung 5 für die Edukte E. Das andere offene Ende des inneren Rohrs 1 wird von dem äußeren Rohr 3, dessen Ende verschlossen ist, überragt. Der das offene Ende von Rohr 1 überragende Bereich des äußeren Rohres 3 wird im folgenden als Brennkammer 11 bezeichnet. Aus dem offenen Ende des inneren Rohrs 1 strömen die vorgewärmten und bereits teilweise umgesetzten Edukte E in die Brennkammer 11, in die über eine Zuführung 4 das Reduktionsmittel R für den exothermen zweiten Verfahrensschritt eingespeist wird. Die Zuführung 4 für das Reduktionsmittel R ist vorzugsweise tangential an Rohr 3 angeordnet.
Das Rohr 3 ist in seiner lichten Weite so bemessen, dass zwischen dem inneren Rohr 1 und dem äußeren Rohr 3 ein Ringraum ausgebildet wird, der als Reaktionsraum 8 dient. Nach Zugabe des Reduktionsmittels R strömt das Reaktionsgemisch im Reaktionsraum 8 dem aufzuheizenden Strom E aus Chlor und Wasserdampf in Rohr 1 entgegen und wärmt diesen mit der in der exothermen Reaktion freigesetzten Wärme auf die erforderliche Reaktionstemperatur auf. Über die Austrittsöffnung 6 am dem verschlossenen Ende entgegengesetzten anderen Ende des Rohres 3 verlässt das abgekühlte Produktgasgemisch P den Reaktor.

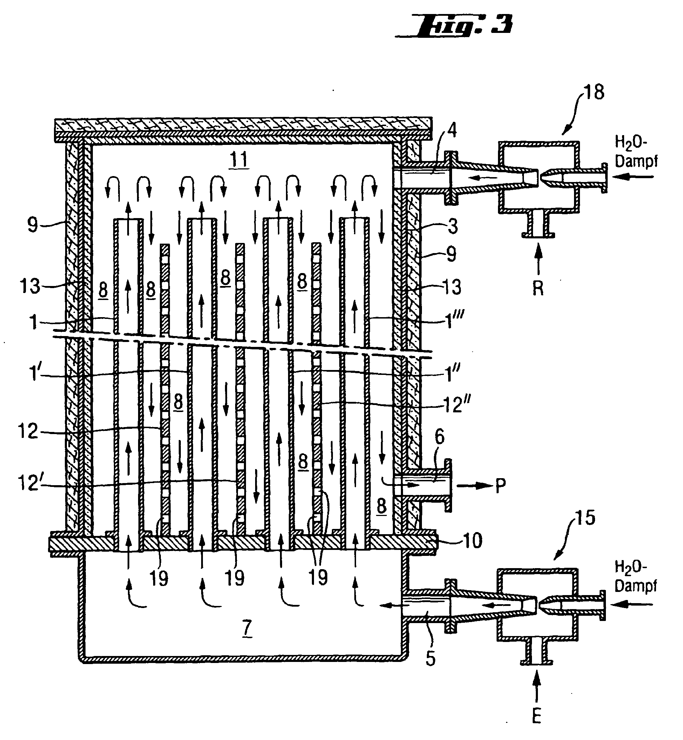

In einer besonders vorteilhaften Variante dieser Vorrichtung sind in den Reaktionsräumen im inneren Rohr 1 oder/und im Reaktionsraum 8 im äußeren Rohr 3 zur Verbesserung der Durchmischung und des Wärmeüberganges statische Mischelemente 14 angeordnet.
Die in den Figuren 1 und 2 dargestellten Vorrichtungen lassen sich besonders einfach in Betrieb nehmen, indem an der Zutrittsöffnung 4, an der im Verlauf des Prozesses das Reduktionsmittel R zugegeben wird, beispielsweise ein Gemisch aus Brennstoff und Luft eingeblasen und entzündet wird. Nach hinreichender vorwärmung der Vorrichtung wird mit der Zugabe von Chlor und Wasserdampf begonnen. In gleichem Maße wird die Menge der über die Zutrittsöffnung 4 zugeführten Verbrennungsluft zurückgefahren, bis die oben beschriebene, gewünschte Reaktion abläuft.
In einer alternativen Ausführung dieser Vorrichtung für das erfindungsgemäße Verfahrenist die Strömungsrichtung umgekehrt, so dass der endotherme erste Verfahrensschritt im Ringraum 8 zwischen innerem Rohr 1 und äußerem Rohr 3 und der exotherme zweite Verfahrensschritt im inneren Rohr 1 abläuft. Die Edukte werden bei dieser Variante über die Öffnung in das äußere Rohr 3 eingespeist und die Produkte über eine Öffnung dem inneren Rohr 1 entnommen.
Eine vorteilhafte Weiterentwicklung der Vorrichtung nach Figur 2 ist in Figur 3 dargestellt. Das äußere Rohr 3 enthält bei dieser Ausführungen mindestens zwei innere Rohre 1, 1', 1 "... Die offenen Enden der Rohre 1, 1', 1 "... münden in die Brennkammer 11, die durch das verschlossenen Ende des äußeren Rohrs 3 begrenzt wird. Die Edukte E werden beispielsweise mit einer dampfbetriebenen Strahlpumpe 15 unter intensiver Durchmischung in die Eduktkammer 7 gefördert, die vom Reaktionsraum 8 durch eine Rohrplatte 10 getrennt ist. Aus der Eduktkammer 7 strömen die Edukte E in die inneren Rohre 1, 1', 1" ..., erwärmen sich und reagieren nach Gleichung (3). Der aus den Rohren 1, 1', 1"... austretende Strom aus Produkten und nicht umgesetzten Edukten E wird in der Brennkammer 11 mit dem Reduktionsmittel R zur exothermen Reaktion gebracht. Das Reduktionsmittel R wird vorteilhaft ebenfalls mit einer dampfbetriebenen Strahlpumpe 18 eingespeist. Die heißen Produkte P strömen im vom äußeren Rohr 3 umschlossenen, vorzugsweise langgestreckt ausgeführten Reaktionsraum 8 den Edukten E in den Rohren 1, 1', 1"... entgegen, wärmen diese auf und treten über die Austrittsöffnung 6 aus der Vorrichtung aus.
In einer vorteilhaften Variante dieser Vorrichtung sind in den Reaktionsräumen in den inneren Rohren 1, 1', 1"... oder/und im Reaktionsraum 8 im äußeren Rohr 3 zur Verbesserung der Durchmischung und des Wärmeüberganges statische Mischelemente 14 angeordnet. Die statischen Mischelemente 14 sind in Figur 3 der besseren Übersichtlichkeit halber nicht dargestellt. Ihre Anordnung entspricht der in Figur 2 dargestellten Weise.
Der Wärmeübergang zwischen den Reaktionsräumen lässt sich weiter verbessern, wenn im Reaktionsraum 8 zwischen den Rohren 1, 1', 1"... poröse Einbauten, beispielsweise Wände 12, 12', 12"... eingesetzt werden, die von den Produktgasen P aufgeheizt werden und durch Strahlung Wärme an die Rohre 1, 1', 1"... abgeben. Die Wände 12, 12', 12"...enthalten Öffnungen 19, durch welche die Produktgase P zur Austrittsöffnung 6 strömen können.

Geeignete Materialien für die Rohre 1, 1', 1"..., durch die das aufzuheizende Eduktgemisch E strömt, sind Keramiken, die sich sowohl durch hohe Warmfestigkeit als auch durch hohe Korrosionsbeständigkeit auszeichnen, beispielsweise Siliciumcarbid-, Siliciumnitrid- und Oxidkeramiken.
Die wärmeabstrahlenden Wände 12, 12', 12"... in Reaktionsraum 8 werden vorzugsweise ebenfalls aus einem keramischen Material, beispielsweise aus Aluminiumoxid oder Siliciumcarbid gefertigt.

Der Wärme- und Stofftransport wird verbessert, wenn die Rohre 1, 1', 1"... und/oder Rohr 3 komplett oder zumindest teilweise mit einer inerten Schüttung befüllt sind. Als Schüttungskörper sind u.a. Raschigringe, Kugeln, gebrochenes Gut, Sattelkörper oder Schäume aus Carbid-, Silikat- oder Oxidkeramiken geeignet. Die Schüttungskörper bilden ein offenporiges System, das als statischer Mischer 14 wirkt. (siehe Figur 2).

Alternativ kann der Reaktor für den exothermen zweiten Verfahrensschritt als Porenbrenner ausgebildet sein. Aufbau und Wirkungsweise von Porenbrennern sind beispielsweise in der DE 199 39 951 beschrieben.

In einer weiteren Ausführungsform der Vorrichtung wird in den Rohren, in denen die Umkehrung der Deacon-Reaktion stattfindet, zur Beschleunigung der Reaktion ein Katalysator vorgesehen, der auf einem temperatur- und korrosionsbeständigen, inerten Träger aufgebracht ist. Dieser Katalysator kann auch auf als statische Mischer gestaltete Strukturen der oben beschriebenen Art oder keramische Wabenkörper aufgebracht werden. Als geeignete Katalysatoren für die Deacon-Reaktion nach Gleichung (3*) sind aus der Literatur Salze der folgenden Metalle bekannt: K, Be, Mg, Sc, Y, Lanthaniden , Ti, Zr, Cr, Mo, W, Mn, Fe, Co, Ni, Cu, Au, Zn, Pb, Sb, Bi, Pt, Th, U /F. Wolf et al, Zeitschrift für anorganische und allgemeine Chemie, Bd. 304 (1960) Seiten 48 bis 57/, sowie Oxide von Kupfer und Mangan (Braunstein) /M. W. Hisham und S. W. Benson, J. Phys Chem.Vol 989 (1995) Seiten 6194-6198/.
Geeignete Trägermaterialien für den Katalysator sind keramische Materialien auf der Basis von Carbiden, beispielsweise Siliciumcarbid, auf der Basis von Silikaten, beispielsweise gebrannter Ton, oder auf der Basis von Oxiden, beispielsweise Aluminiumoxid. Die Auswahl des Trägermaterials richtet sich nach der Temperatur, bei der der Katalysator eingesetzt werden soll. Nach dem Schlickerguss-Verfahren hergestellte Katalysatorträger, z.B. auf Basis von Siliciumcarbid, sind ebenfalls einsetzbar. Hier kann der Katalysator mit dem Schlicker fest in die Trägerstruktur eingebunden sein.

Das Rohr 3 mit der Brennkammer 11 wird aus Graphit oder aus Stahl gefertigt. Ein Graphitreaktor muss von außen mit Wasser gekühlt werden. Dabei sollten jedoch möglichst vermieden werden, dass auch die in der Nähe der Reaktorwand strömenden Gase abgekühlt werden. Dadurch würde im Reaktor eine ungleichmäßige Temperaturverteilung mit einem Temperaturgradienten zwischen dem Reaktorinneren und dem wandnahen Bereich entstehen. Deshalb wird die Innenseite der Wand des Graphitreaktors mit einer Ausmauerung 13 oder einem Einsatz aus einem keramischen Material versehen. Besteht der Reaktor aus Stahl, so muss eine Abkühlung unter den Taupunkt des Produktgase vermieden werden, denn die dabei entstehende Salzsäure würde zur Korrosion des Reaktors führen. Deshalb erhält ein Stahlreaktor zur Verminderung des Wärmeverlustes eine Ausmauerung 13 oder/und eine äußere Wärmeisolierung 9, beispielsweise aus Matten aus keramischem Fasermaterial. Die Korroisionsbeständigkeit lässt sich außerdem durch eine Emaillierung des Stahlreaktors verbessern.

### Bezugszeichenliste

- 1, 1', 1"...: erste Reaktionsrohre
- 2: Verbindungsstück
- 2a: Venturidüse
- 2b: Bohrung
- 2c: Verteilerkammer
- 3: zweites Reaktionsrohr
- 4: Zutrittsöffnung für das Reduktionsmittel R
- 5: Zutrittsöffnung für die Edukte E
- 6: Austrittsöffnung für die Produkte P
- 7: Eduktkammer
- 8: Reaktionsraum (Ringraum)
- 9: Isolierung des äußeren Rohres 3
- 10: Rohrplatte
- 11: Reaktionsraum
- 12, 12', 12": wärmeabstrahlende poröse Einbauten
- 13: Ausmauerung
- 14: statische Mischer
- 15: Strahlpumpe
- 16: Heizeinrichtung
- 17: Kühleinrichtung
- 18: Strahlpumpe
- 19: Öffnung
- E: Edukte (Chlor und Wasserdampf)
- R: Reduktionsmittel
- P: Produktgasgemisch

## Patentansprüche

1. Verfahren zur Herstellung von Chlorwasserstoff
**dadurch gekennzeichnet, dass**
unter Wärmezufuhr in einem ersten Verfahrensschritt Chlor mit Wasserdampf in einem endothermen Prozess zu einem Gemisch aus Chlorwasserstoff und Sauerstoff reagiert, und in einem zweiten Verfahrensschritt durch Zugabe eines Reduktionsmittels in einer exothermen Reaktion im ersten Verfahrensschritt nicht umgesetztes Chlor zu Chlorwasserstoff umgesetzt wird und im ersten Verfahrensschritt gebildeter Sauerstoff durch das Reduktionsmittel gebunden wird.

2. Verfahren nach Anspruch 1, **dadurch gekennzeichnet, dass** der endotherme erste Verfahrensschritt bei einer Temperatur im Bereich von 350 bis 1200 °C durchgeführt wird.

3. Verfahren nach Anspruch 1, **dadurch gekennzeichnet, dass** der exotherme zweite Verfahrensschritt bei einer Temperatur im Bereich von 900 bis 1600 °C durchgeführt wird.

4. Verfahren nach einem der vorhergehenden Ansprüche, **dadurch gekennzeichnet, dass** der im ersten Verfahrensschritt eingespeiste Wasserdampf auf 110 bis 350 °C überhitzt ist.

5. Verfahren nach einem der vorhergehenden Ansprüche, **dadurch gekennzeichnet, dass** der eingespeiste Wasserdampf in einem 1,5- bis 2,5 fachen Überschuss zugeführt wird

6. Verfahren nach einem der vorhergehenden Ansprüche, **dadurch gekennzeichnet, dass** als Reduktionsmittel Methan, Erdgas, verdampfbare Kohlenwasserstoffe, Kohlenmonoxid oder Wasserstoff verwendet werden.

7. Verfahren nach einem der vorhergehenden Ansprüche, **dadurch gekennzeichnet, dass** das Reduktionsmittel zusammen mit Wasserdampf eingespeist wird, wobei die Dampfmenge so eingestellt wird, dass ein Temperaturniveau im Bereich zwischen 900 und 1600 °C eingestellt wird.

8. Verfahren nach Ansprüchen 1 bis 7, **dadurch gekennzeichnet, dass** der Wasserdampf als Treibmittel für eine Strahlpumpe benutzt wird, welche die Reaktionsgase für den ersten oder/und den zweiten Verfahrensschritt in den Reaktor fördert.

9. Verfahren nach Ansprüchen 1 bis 8, **dadurch gekennzeichnet, dass** die im exothermen zweiten Verfahrensschritt frei werdende Wärme zur Aufwärmung der Eduktgase (E) für den endothermen ersten Verfahrensschritt verwendet wird.

10. Verfahren nach Anspruch 9, **dadurch gekennzeichnet, dass** die Reaktionsgase des endothermen ersten Verfahrensschrittes im Gegenstrom zu den Reaktionsgasen des exothermen zweiten Verfahrensschrittes geführt werden.

11. Verfahren nach Anspruch 10, **dadurch gekennzeichnet, dass** das Verfahren in einer zwei konzentrisch ineinander gesteckte Rohre (1) und (3) umfassenden Vorrichtung ausgeführt wird, wobei
die Edukte (E) an einem Ende des inneren Rohrs (1) durch eine Zutrittsöffnung (5) zugeführt werden,
die vorgewärmten und bereits teilweise umgesetzten Edukte (E) in den eine Brennkammer (11) bildenden Raum am offenen anderen Ende des inneren Rohres (1) strömen, das vom verschlossenen Ende des äußeren Rohres (3) überragt wird,
in die Brennkammer (11) über eine Zuführung (4) das Reduktionsmittel (R) für den exothermen zweiten Verfahrensschritt eingespeist wird,
im als Reaktionsraum dienenden Ringraum (8) zwischen innerem Rohr (1) und äußerem Rohr (3) das Reaktionsgemisch im Gegenstrom zum aufzuheizenden Eduktstrom im inneren Rohr (1) strömt, und
das abgekühlte Produktgemisch das äußere Rohr (3) über eine Austrittsöffnung (6) am der Brennkammer (11) entgegengesetzten Ende verlässt.

12. Verfahren nach Anspruch 11, **dadurch gekennzeichnet, dass** die Edukte (E) aus der Eduktkammer (7) durch mehrere innere Rohre (1, 1', 1"...)zur Brennkammer (11) strömen.

13. Verfahren nach Anspruch 11 oder 12, **dadurch gekennzeichnet, dass** die Produktgase (P) im Reaktionsraum (8) befindliche poröse Einbauten (12, 12', 12"...) aufheizen, welche die von den Produktgasen (P) aufgenommene Wärme durch Strahlung an die Rohre (1, 1', 1" ...) und die darin geführten Edukte (E) abgeben.

14. Verfahren nach einem der Ansprüche 11 oder 12, **dadurch gekennzeichnet, dass** im inneren Rohr (1) bzw. in den inneren Rohren (1, 1', 1"...) und/oder im Reaktionsraum (8) im äußeren Rohr (3) die Durchmischung und der Wärmeübergang durch statische Mischelemenete (14) verbessert werden.

15. Verfahren nach einem der Ansprüche 11 oder 12, **dadurch gekennzeichnet, dass** der Wärme- und Stofftransport durch eine ein offenporiges System bildende inerte Schüttung erfolgt, mit der die Rohre (1, 1', 1"...) und/oder Rohr (3) komplett oder teilweise befüllt sind.

16. Verfahren nach Anspruch 10, **dadurch gekennzeichnet, dass** das Verfahren in einer zwei konzentrisch ineinander gesteckte Rohre (1) und (3) umfassenden Vorrichtung ausgeführt wird, wobei
die Edukte (E) an einem Ende des äußeren Rohrs (3) zugeführt werden,
die vorgewärmten und bereits teilweise umgesetzten Edukte (E) in den eine Brennkammer (11) bildenden Raum am verschlossenen anderen Ende des äußeren Rohres (3) strömen, welches das offene Ende des inneren Rohres (1) überragt,
in die Brennkammer (11) über eine Zuführung (4) das Reduktionsmittel (R) für den exothermen zweiten Verfahrensschritt eingespeist wird,
im innerem Rohr (1) das Reaktionsgemisch im Gegenstrom zum aufzuheizenden Eduktstrom im äußeren Rohr (3) strömt, und
das abgekühlte Produktgemisch das innere Rohr (1) am der Brennkammer (11) entgegengesetzten Ende verlässt.

17. Verfahren nach Anspruch 1 bis 16 , **dadurch gekennzeichnet, dass** die endotherme Reaktion des ersten Verfahrensschrittes in Gegenwart eines Katalysators aus der Gruppe der Schwermetallsalze, der auf einem Träger aus wärmebeständiger Keramik fixiert ist, durchgeführt wird.

18. Verfahren nach Anspruch 17, **dadurch gekennzeichnet, dass** als Katalysator ein Kupfer(II)-Salz verwendet wird.

19. Verfahren nach Anspruch 17, **dadurch gekennzeichnet, dass** der Katalysator auf einem Träger aus einem keramischen Material aus der Gruppe der Carbide, der Oxide oder der Silikate fixiert ist.

20. Verfahren nach Anspruch 17, **dadurch gekennzeichnet, dass** der Katalysator auf einem Träger aus Aluminiumoxidkeramik fixiert ist.

21. Verfahren nach Anspruch 1 bis 20, **dadurch gekennzeichnet, dass** der exotherme zweite Verfahrensschritt in einem Porenbrenner abläuft.

## Claims

1. A process for the preparation of hydrogen chloride,
**characterised in that**
in a first process step, with the introduction of heat, chlorine is reacted with steam in an endothermic process to give a mixture of hydrogen chloride and oxygen, and in a second process step, chlorine that has not reacted in the first process step is reacted to give hydrogen chloride in an exothermic reaction by adding a reducing agent and oxygen formed in the first process step is bonded by the reducing agent.

2. A process according to claim 1, **characterised in that** the endothermic first process step is performed at a temperature in the range 350 to 1200°C.

3. A process according to claim 1, **characterised in that** the exothermic second process step is performed at a temperature in the range 900 to 1600°C.

4. A process according to one of the preceding claims, **characterised in that** the feedstock steam in the first process step is superheated to 110 to 350°C.

5. A process according to one of the preceding claims, **characterised in that** the feedstock steam is supplied in a 1.5 to 2.5-fold excess.

6. A process according to one of the preceding claims, **characterised in that** methane, natural gas, vaporizable hydrocarbons, carbon monoxide or hydrogen are used as reducing agents.

7. A process according to one of the preceding claims, **characterised in that** the reducing agent is supplied together with steam, wherein the amount of steam is adjusted so that a temperature level in the range between 900 and 1600°C can be set.

8. A process according to claims 1 to 7, **characterised in that** the steam is used as the pumping fluid for a jet pump that conveys the reaction gases for the first and/or the second process step into the reactor.

9. A process according to claims 1 to 8, **characterised in that** the heat being released in the exothermic second process step is used to heat the feedstock gases (E) for the endothermic first process step.

10. A process according to claim 9, **characterised in that** the reaction gases in the endothermic first process step are supplied in counterstream to the reaction gases for the exothermic second process step.

11. A process according to claim 10, **characterised in that** the process is performed in a device comprising two concentric tubes (1) and (3) that fit into each other, wherein
the feedstocks (E) are supplied at one end of the internal tube (1) through an inlet opening (5),
the preheated and already partly reacted feedstocks (E) flow into a space forming a combustion chamber (11) at the other, open, end of the internal tube (1) that is surrounded by the sealed end of the outer tube (3),
the reducing agent (R) for the exothermic second process step is supplied to the combustion chamber (11) via an inlet pipe (4),
the reaction mixture flows in counterstream to the feedstock stream being heated in internal tube (1), inside the annular space (8) between internal tube (1) and external tube (3) that acts as a reaction space, and
the cooled product mixture leaves the external tube (3) via outlet opening (6) at the opposite end from the combustion chamber (11).

12. A process according to claim 11, **characterised in that** feedstocks (E) flow out of the feedstock chamber (7) through several internal tubes (1, 1', 1''...) to the combustion chamber (11).

13. A process according to claim 11 or 12, **characterised in that** the product gases (P) heat up porous inserts (12, 12', 12'', ...) in the reaction space (8) and that these emit by radiation the heat absorbed from product gases (P) to tubes (1, 1' , 1'' ...) and the feedstocks (E) carried therein.

14. A process according to one of claims 11 or 12, **characterised in that** thorough mixing and heat transfer in internal tube (1) or in internal tubes (1, 1', 1"...) and/or in the reaction space (8) in external tube (3) are improved by static mixing elements (14).

15. A process according to one of claims 11 or 12, **characterised in that** the transport of heat and material takes place through an inert packing that forms an open-pore system, with which tubes (1, 1', 1" ...) and/or tube (3) are completely or partly filled.

16. A process according to claim 10, **characterised in that** the process is performed in a device comprising two concentric tubes (1) and (3) that fit into each other, wherein
the feedstocks (E) are supplied at one end of the external tube (3),
the preheated and already partly reacted feedstocks (E) flow into the space forming a combustion chamber (11) at the other, sealed, end of the external tube (3) that surrounds the open end of the internal tube (1),
the reducing agent (R) for the exothermic second process step is supplied to the combustion chamber (11) via an inlet pipe (4),
in internal tube (1), the reaction mixture flows in counterstream to the feedstock stream being heated in external tube (3), and
the cooled product mixture leaves the internal tube (1) at the opposite end from the combustion chamber (11).

17. A process according to claims 1 to 16, **characterised in that** the endothermic reaction in the first process step is performed in the presence of a catalyst from the group of heavy metal salts that is fixed on a support made of heat-resistant ceramic.

18. A process according to claim 17, **characterised in that** a copper(II) salt is used as catalyst.

19. A process according to claim 17, **characterised in that** the catalyst is fixed on a support made of a ceramic material from the group of carbides, oxides or silicates.

20. A process according to claim 17, **characterised in that** the catalyst is fixed on a support made of aluminium oxide ceramic.

21. A process according to claims 1 to 20, **characterised in that** the exothermic second process step takes place in a pore burner.

## Revendications

1. Procédé de fabrication de gaz chlorhydrique,
**caractérisé en ce que**
dans une première étape de procédé avec apport de chaleur, le chlore réagit en un mélange constitué de gaz chlorhydrique et d'oxygène avec de la vapeur d'eau lors d'un processus endotherme et, dans une deuxième étape de procédé, le chlore non converti lors de la première étape est converti en gaz chlorhydrique lors d'une réaction exotherme par addition d'un agent de réduction et l'oxygène formé lors de la première étape est lié par l'agent de réduction.

2. Procédé selon la revendication 1,
**caractérisé en ce que**
la première étape de procédé endotherme est réalisée à une température de l'ordre de 350 à 1200°C.

3. Procédé selon la revendication 1,
**caractérisé en ce que**
la deuxième étape de procédé exotherme est réalisée à une température de l'ordre de 900 à 1600°C.

4. Procédé selon l'une quelconque des revendications précédentes,
**caractérisé en ce que**
la vapeur d'eau apportée lors de la première étape de procédé est surchauffée à une température de 110 à 350°C.

5. Procédé selon l'une quelconque des revendications précédentes,
**caractérisé en ce que**
la vapeur d'eau apportée est acheminée en excédent de 1,5 à 2,5 fois.

6. Procédé selon l'une quelconque des revendications précédentes,
**caractérisé en ce que**
comme agent de réduction, on utilise du méthane, du gaz naturel, des hydrocarbures évaporables, du monoxyde de carbone ou de l'hydrogène.

7. Procédé selon l'une quelconque des revendications précédentes,
**caractérisé en ce que**
l'agent de réduction est apporté en même temps que la vapeur d'eau, la quantité de vapeur étant ajustée de manière à fixer un niveau de température compris entre 900 et 1600°C.

8. Procédé selon les revendications 1 à 7,
**caractérisé en ce qu'**
on utilise la vapeur d'eau en tant qu'agent moteur pour une pompe à jet qui transporte les gaz réactionnels destinés à la première et/ou à la deuxième étape du procédé vers le réacteur.

9. Procédé selon les revendications 1 à 8,
**caractérisé en ce qu'**
on utilise la chaleur libérée lors de la deuxième étape exotherme pour réchauffer les éduits gazeux (E) pour la première étape endotherme.

10. Procédé selon la revendication 9,
**caractérisé en ce que**
les gaz de réaction de la première étape endotherme sont acheminés à contre courant vers les gaz réactionnels de la deuxième étape exotherme.

11. Procédé selon la revendication 10,
**caractérisé en ce que**
le procédé est réalisé dans un dispositif comprenant deux tubes (1) et (3) emboîtés concentriquement l'un dans l'autre,
les éduits (E) étant acheminés vers une extrémité du tube intérieur (1) par un orifice d'admission (5),
les éduits (E) préchauffés et déjà partiellement convertis coulent vers l'intérieur de l'espace formant une chambre de combustion (11) sur l'autre extrémité ouverte du tube intérieur (1) qui dépasse de l'extrémité fermée du tube extérieur (3),
l'agent de réduction (R) est introduit dans la chambre de combustion (11) via un dispositif d'alimentation (4) pour la deuxième étape exotherme,
dans l'espace annulaire (8) servant d'espace réactionnel, entre le tube intérieur (1) et le tube extérieur (3), le mélange réactionnel coule à contre-courant vers le flux d'éduit, qu'il s'agit de chauffer, dans le tube intérieur (1), et
le mélange de produits refroidi quitte le tube extérieur (3), par un orifice de sortie (6), sur la chambre de combustion (11).

12. Procédé selon la revendication 11,
**caractérisé en ce que**
les éduits (E) sortent de la chambre à éduits (7) et coulent vers la chambre de combustion (11) à travers plusieurs tubes intérieurs (1, 1', 1",...).

13. Procédé selon la revendication 11 ou 12,
**caractérisé en ce que**
les produits gazeux (P) chauffent des inserts (12, 12', 12", ...) poreux se trouvant dans la chambre de réaction (8), inserts qui délivrent la chaleur, absorbée par les produits gazeux (P) aux tubes (1, 1', 1", ...) et aux éduits qui se trouvent à l'intérieur (E), par radiation.

14. Procédé selon l'une quelconque des revendications 11 ou 12,
**caractérisé en ce que**
dans le tube intérieur (1) respectivement dans les tubes intérieurs (1, 1', 1",...) et/ou dans la chambre de réaction (8) dans le tube extérieur (3), le mélange intime et le transfert de chaleur sont améliorés par des éléments mélangeurs (14) statiques.

15. Procédé selon l'une quelconque des revendications 11 ou 12,
**caractérisé en ce que**
le transport de chaleur et de substances est assuré par une masse en vrac inerte formant un système à pores ouverts, dont les tubes (1, 1', 1", ...) et/ou le tube (3) sont complètement ou partiellement remplis.

16. Procédé selon la revendication 10,
**caractérisé en ce que**
le procédé est réalisé dans un dispositif comprenant deux tubes (1) et (3) emboîtés concentriquement l'un dans l'autre,
les éduits (E) passant sur l'extrémité du tube extérieur (3),
les éduits (E) préchauffés et déjà partiellement convertis coulent vers l'intérieur de l'espace formant une chambre de combustion (11) sur l'autre extrémité fermée du tube extérieur (3) qui dépasse de l'extrémité ouverte du tube intérieur (1),
l'agent de réduction (R) est introduit dans la chambre de combustion (11) via un dispositif d'alimentation (4) pour la deuxième étape exotherme,
dans le tube intérieur (1), le mélange réactionnel coule à contre courant vers le flux d'éduit, qu'il s'agit de chauffer, à l'intérieur du tube extérieur (3), et
le mélange de produits refroidi quitte le tube intérieur (1), sur l'extrémité opposée à la chambre de combustion (11).

17. Procédé selon la revendication 1 à 16,
**caractérisé en ce que**
la réaction endotherme de la première étape de procédé est réalisée en présence d'un catalyseur provenant du groupe des sels de métal lourd immobilisé sur un support en céramique résistante à la chaleur.

18. Procédé selon la revendication 17,
**caractérisé en ce qu'**
on utilise, comme catalyseur, un sel de cuivre (II).

19. Procédé selon la revendication 17,
**caractérisé en ce que**
le catalyseur est immobilisé sur un support en matière céramique provenant du groupe des carbures, des oxydes ou des silicates.

20. Procédé selon la revendication 17,
**caractérisé en ce que**
le catalyseur est immobilisé sur un support en céramique à base d'oxyde d'aluminium.

21. Procédé selon la revendication 1 à 20,
**caractérisé en ce que**
la deuxième étape exotherme se déroule dans un brûleur poreux.
